# EUROPEAN PATENT APPLICATION

(11) **EP 4 568 304 A1**
(43) Date of publication of application: **11.06.2025**
(21) Application number: 24217373.0
(22) Date of filing: 04.12.2024
(51) Int. Cl.: H04W 4/08

(54) **SYSTEMS AND METHODS FOR PEFORMING GROUP PAGING OF WIRELESS TERMINALS OF A COMMUNICATION SYSTEM**

(30) Priority: 04.12.2023 US 202318528594
(71) Applicant: Vtech Telecommunications Limited, New Territories Hong Kong (HK)
(72) Inventor: POTHIBOON, Supajet Guy, BC V6V 0A3 (CA); CHEUNG, Sherla Wai Chi, BC V3B 0E3 (CA); CHENG, Bennett, BC V6V 0A3 (CA)
(74) Representative: D Young & Co LLP

(57) **Abstract**

To perform group paging of wireless terminals, a network receives at a first base station of one or more base stations, Internet Protocol multicast packets directed to a first multicast address corresponding to a first paging group. The first base station determines whether wireless terminals of a first paging group corresponding to the first multicast address are localized to the first base station. The first base station controls a first processor to process the multicast packets directed to the first multicast address based on determining whether one or more wireless terminals are localized to the first base station. The processing comprises converting the multicast packets directed to the first multicast address into a first audio stream. The first base station outputs the first audio stream to a localized set of said one or more wireless terminals of the first paging group.

## Description

### BACKGROUND

### Technical Field

The present disclosure generally relates to performing group paging of wireless terminals of a multicell communication system.

### Description of the Related Art

Multicast operations employ the simultaneous transmission of Internet Protocol (IP) data packets to a group of recipient devices, rather than a single device. Each recipient device is configured to receive IP multicast streams and is identified as being part of a particular group of recipient devices by a specific multicast address. This arrangement uses less bandwidth to send IP data packets to multiple devices than unicast operations would require.

The implementation of multicast operations, particularly for multicell wireless communication systems, faces unique challenges. For example, each wireless terminal within a recipient group of an IP multicast message may be connected to different base station within the multicell system. This adds to overall system complexity. Furthermore, as wireless terminals roam between base stations during multicast transmission, maintaining uninterrupted and synchronized audio playback becomes a significant technical challenge, because the wireless terminal may roam to a base station which is not receiving a corresponding IP multicast message.

### SUMMARY

Particular aspects are set out in the appended independent claims. Various optional embodiments are set out in the dependent claims.

In one aspect, disclosed embodiments are directed to a method, system, and computer-readable media for performing group paging of wireless terminals in communication with one or more base stations of a communication system. The method includes receiving, via a network, at a first base station of said one or more base stations, Internet Protocol (IP) multicast packets directed to a first multicast address corresponding to a first paging group. The method further includes determining whether one or more wireless terminals of a first paging group corresponding to the first multicast address are localized to the first base station. The method further includes controlling a first processor to process the multicast packets directed to the first multicast address based on said determining. The processing comprises converting the multicast packets directed to the first multicast address into a first audio stream. The method further includes outputting the first audio stream to a localized set of said one or more wireless terminals of the first paging group.

Embodiments may include one or more of the following features, individually or in combination.

The outputting the first audio stream to a localized set of one or more wireless terminals of the first paging group may include the first audio stream being output to a first set of one or more audio processors which broadcasts the first audio stream to be played by the localized set of said one or more wireless terminals of the first paging group. The determining whether the one or more wireless terminals of the first paging group are localized to the first base station may include the first base station accessing a shared database comprising terminal localization information.

The method may further include determining whether one or more wireless terminals of the first paging group are localized to a second base station of the communication system. The method may further include establishing a proxy call between the first base station and the second base station. The method may further include transmitting the first audio stream to the second base station via the proxy call.

The second base station may output the audio stream to said one or more wireless terminals of the first paging group that are localized to the second base station. In said determining whether said one or more wireless terminals of the first paging group are localized to a second base station, the first base station may accesse a shared database comprising terminal localization information.

The method may further include receiving, at the first base station of said one or more base stations, IP multicast packets directed to a second multicast address corresponding to a second paging group. The method may further include determining whether one or more wireless terminals of the second paging group corresponding to the second multicast address are localized to the first base station. The method may further include controlling a second processor to process the multicast packets directed to the second multicast address based on said determining. The processing comprising converting the multicast packets directed to the second multicast address into a second audio stream. The method may further include outputting, by the second processor, the second audio stream to a localized set of said one or more wireless terminals of the second paging group localized to the first base station.

In another aspect, disclosed embodiments are directed to a method, system, and computer-readable media for performing group paging of wireless terminals in communication with one or more base stations of a communication system. The method may include receiving, by a first base station of said one or more base stations, a first audio stream from a wireless terminal localized to the first base station the localized terminal being associated with a first paging group. The method further includes controlling a first processor to process the first audio stream, the processing comprising converting the first audio stream into Internet Protocol (IP) multicast packets. The method further includes transmitting the IP multicast packets to a network, via the first processor of the first base station, directed to a first multicast address corresponding to the first paging group.

Embodiments may include one or more of the following features, individually or in combination.

In the receiving, by a first base station, of the first audio stream, the first audio stream may be received by an audio processor which outputs the audio stream to the first processor. The method may further include detecting that the first wireless terminal has localized to a second base station of said one or more base stations. The method may further include establishing a proxy call between the first base station and the second base station, wherein the proxy call is established by a second processor of the first base station and a processor of the second base station. The method may further include transmitting the first audio stream via the proxy call from the second base station to the first base station to continue said transmitting the IP multicast packets to the network via the first processor of the first base station.

In said transmitting the first audio stream via the proxy call, the second processor of the first base station may be placed in communication with the first processor of the first base station.

### BRIEF DESCRIPTION OF THE DRAWINGS

Where considered appropriate, reference numerals may be repeated among the drawings to indicate corresponding or analogous elements. Moreover, some of the blocks depicted in the drawings may be combined into a single function.
Figure 1 depicts a set of equipment for a Digital Enhanced Cordless Telecommunications (DECT) system including a multicell base station and a number of wireless terminals adapted for efficiently propagating wireless terminal configuration updates.
Figure 2 depicts an implementation of a multicell DECT system for performing group paging of wireless terminals in which each base station includes a multicast listener.
Figure 3 depicts an implementation of a multicell DECT system for performing group paging of wireless terminals in which one or more base stations include a multicast listener.
Figure 4 depicts an implementation of a multicell DECT system 400 for performing group paging of wireless terminals in which one or more base stations include a multicast sender.
Figure 5 depicts an implementation of a multicell DECT system 500 for performing group paging of wireless terminals in which a wireless terminal localizes to a new base station while transmitting a page.
Figure 6 depicts an implementation of a multicell DECT system 600 for performing group paging of wireless terminals in which a first base station 610 transmits separate IP multicast streams and a second base station 612 receives separate multiple IP streams.
Figure 7 is a flowchart of a method for performing group paging of wireless terminals in communication with one or more base stations of a communication system.
Figure 8 is a flowchart of a method for performing group paging of wireless terminals in communication with one or more base stations of a communication system.
Figure 9 depicts a base station of a multicell DECT system in which a call is established between a wireless terminal localized to the base station.

### DETAILED DESCRIPTION

In the following detailed description, numerous specific details are set forth to provide a thorough understanding of the present teachings. However, it will be understood by those of ordinary skill in the art that the presently taught approaches and the example embodiments provided herein may be practiced without these specific details. In other instances, well-known methods, procedures, components, and circuits have not been described in detail so as not to obscure the presently taught approaches and techniques.

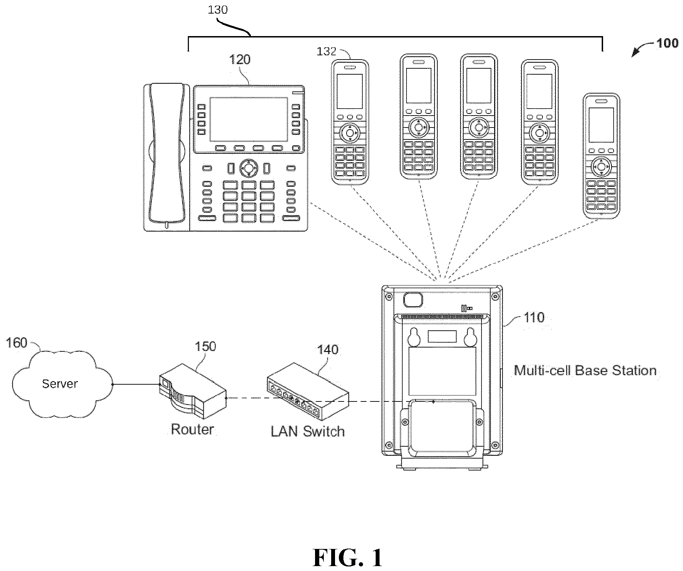

Figure 1 depicts a set of equipment 100 for a Digital Enhanced Cordless Telecommunications (DECT) system including a multicell base station 110 and a number of wireless terminals (120, 130) adapted for efficiently propagating wireless terminal configuration updates. In the example depicted, the base station 110 is set up to communicate with a cordless deskset 120 and a number of cordless handsets 130. In some cases, the base station 110 may be connected to a local area network (LAN) switch 140, which is in communication with a router 150. The router 150, in turn, is connected to a hosted Internet Protocol (IP) private branch exchange (PBX) 160 which provides access to the public switched telephone network. In embodiments, there are multiple base stations 110 and wireless communication terminals (120, 130). The wireless terminals (120, 130) may roam among base stations 110 during operation.

In embodiments, one base station is set up as a primary base station and all other base stations are set up as secondary base stations. The primary base station receives configuration changes and then propagates, i.e., transmits, such changes to the secondary base stations via a distributed configuration management system. Configuration changes which are relevant to wireless terminals, as opposed to the base stations, are communicated to each wireless terminal by the base station to which it is localized, i.e., the base station with which it is in communication during operation.

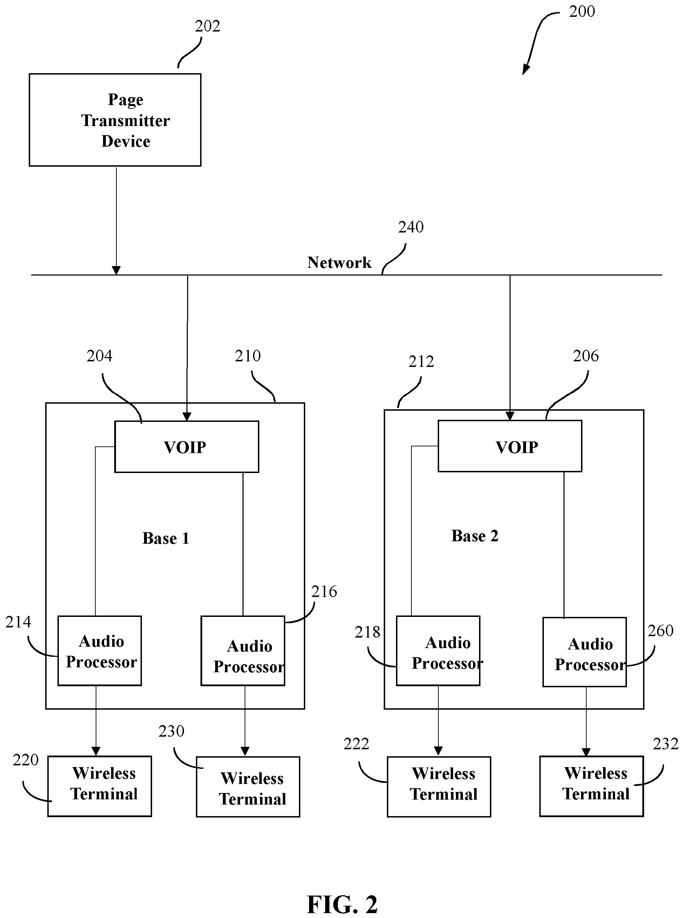

Figure 2 depicts an implementation of a multicell DECT system 200 for performing group paging of wireless terminals in which each base station includes a multicast listener. The system 200 includes an IP-based network 240, e.g., a wired local area network (LAN). In embodiments, the network 240 may provide communication with a page transmitter device 202. The page transmitter device 202 may be configured to transmit pages, i.e., voice messages in the form of audio streams, as IP multicast packets via the network 240. In embodiments, the page transmitter device 202 may be an external or end server.

The network 240 provides communication with a first base station 210 which, in turn, communicates with one or more wireless terminals. In the example depicted in Figure 2, the first base station 210 communicates with two wireless terminals (220 and 230) - typically there may be up to 10 wireless terminals localized to a particular base station. In embodiments, the system 200 is a multicell system and comprises multiple base stations. For example, Figure 2 depicts a second base station 212 which communicates with two wireless terminals (222 and 232). In embodiments, the network 240 and first and second base stations (210 and 212) form part of a DECT system, as depicted in Figure 1.

The first base station 210 includes a processor, e.g., a Voice over Internet Protocol (VoIP) processor 204, to handle incoming data. Similarly, the second base station 212 includes a processor which may also be a VOIP processor 206. The first base station 210 may receive Internet Protocol (IP) multicast packets directed to a first multicast address (e.g., of a defined set of multicast addresses). For example, the first base station 210 may receive the IP multicast packets from the paging device 202. In embodiments, the IP multicast packets form a Real-Time Transport Protocol (RTP) stream.

In embodiments, each multicast address in the defined set of multicast addresses may correspond to a paging group. A paging group is a group of devices (e.g., wireless terminals) that are identified by the multicast address as recipients of the IP multicast packets. For example, each multicast address may correspond to a paging group based on an IP address and port of the multicast address. Accordingly, a first paging group may have a corresponding first IP address and port, a second paging group may have a corresponding second IP address and port, etc. In embodiments, the set of multicast addresses may contain only one multicast address corresponding to a single paging group.

Upon receiving incoming packets directed to a multicast address of a first paging group via the network 240, the first base station 210 determines whether one or more terminals of the first paging group corresponding to the first multicast address are localized to the first base station 210. To make this determination, the first base station 210 may access a shared database within the system 200. The shared database includes individual databases located at one or more base stations within the system 200. Together, the databases collectively form a distributed or decentralized shared database.

The shared database may store and share status information across the system in real-time such as wireless terminal locations, wireless terminal statuses, or changes to any such information. Wireless terminal information may include, for example that wireless terminal 220 is localized to the first base station 210. The distributed shared database may be updated, synchronized, and maintained using replication or duplication. For example, if wireless terminal 220 localizes (e.g., roams) to another base station, e.g., a second base station 212, the shared database at the second base station is updated to indicate that wireless terminal 220 is now localized at second base station 212. The updated status information is relayed from the second base station 212 back to the first base station 210, thereby synchronizing the status information at each base station.

Wireless terminal status information may be used for "busy monitoring" capabilities and may include, for example, that wireless terminal 220 has one of the following statuses: not in use, such as idle; in use, such as on a call, on hold, ringing, or dialing; do not disturb; low battery; powered off; out of range of a base station; or another status. Such information can be used by the first base station to determine whether a wireless terminal within the paging group can receive the audio messages within the IP multicast packets. For example, if wireless terminal 220 is localized at the first base station 212 and is part of the first paging group, the first base station 210 checks the status information within the shared database. If the status information indicates that the wireless terminal 220 is powered off, the first base station 210 may determine not to attempt to transmit the audio message within the IP multicast packets to the wireless terminal 220. The first base station 210 may also periodically repeat the determination process to account for status in the shared database such as wireless terminal roaming or wireless terminals becoming powered off.

In embodiments, status information may be transmitted or broadcast from one base station to another and from each of the base stations to one or more wireless terminals. Specifically, status information may be relayed to each base station in a multicell system via broadcast or a wired network, e.g., a LAN; and the status information may be broadcast as a status message to each wireless terminal localized to the respective base stations, e.g., via one or more dedicated broadcast channels. In embodiments, the status message is broadcast by two or more base stations of the system 200, such as all base stations of the system 200. In embodiments, each base station from which the status message is broadcast may broadcast the same status information, because the databases of the base stations are synchronized by the relaying of status information therebetween.

The first base station 210 may further be configured to control the VoIP processor 204 to process the multicast packets directed to the first multicast address based on a determination that one or more wireless terminals of the first paging group are localized to the first base station 210. The processing converts the multicast packets directed to the first multicast address into a first audio stream. The controlling of VoIP processor 204 may be performed, at least in part, by a call controller of the first base station 210.

The VoIP processor 204 may be configured to output the first audio stream to a localized set of wireless terminals of the first paging group. For example, the VoIP processor 204 may output the first audio stream to wireless terminals 220 and 230 (if both those terminals are in the first paging group) or just wireless terminal 220 (if only wireless terminal 220 is part of the first paging group).

In outputting the first audio stream, the first audio stream may be broadcast to the localized set of wireless terminals of the first paging group via respective Time Division Multiplexing (TDM) channels. Further, outputting the first audio stream can include the VoIP processor 204 transferring the first audio stream to a first set of one or more audio processors which broadcasts the first audio stream to be played by the localized set of wireless terminals of the first paging group. For example, in the first base station 204, the first audio stream may be output from the VoIP processor 204 to audio processors 214 and 216 which may broadcast the first audio stream via TDM channel to wireless terminal 220 and 230 respectively. Although audio processors 214 and 216 are depicted in the figure as separate blocks, they may be integrated and/or may correspond to individual channels and/or circuits of a single component or device. Thus, a single audio processor may perform the functions of depicted audio processors 214 and 216. The audio processors and VoIP processor may be implemented integrally in various combinations, such as in a single (or a few) processors and/or integrated circuits.

In embodiments, the second base station 212 may also be configured to determine whether one or more terminals of a first paging group corresponding to the first multicast address are localized to the first base station 210. The second base station 212 may further be configured to control processors 206 to process the multicast packets directed to the first multicast address based on the determination of whether one or more wireless terminals of the first paging group are linked to each respective base station 212.

The VoIP processors 206 of the second base station 612 is configured to output the first audio stream to a localized set of wireless terminals of the first paging group. For example, VoIP processor 206 may only output the first audio stream to wireless terminal 222 if wireless terminal 222 is the only terminal localized to the second base station 212 that is part of the first paging group.

In another example, in the second base station 206, the first audio stream may be output from the VoIP processor 206 to audio processor 218 which broadcast via TDM channel the first audio stream to wireless terminal 222. The VoIP processor 206 may not output the first audio stream to audio processor 260 after it is determined that the wireless terminal 232 is not part of the first paging group.

In embodiments each audio processors of the first set of one or more audio processors may each be associated with a corresponding frequency slot of the first base station. Each specific frequency slot may be used to communicate with a corresponding wireless terminal. For example, an audio processor 214 may use a first frequency slot to broadcast the first audio stream to wireless terminal 220 over a first frequency, and another audio processor 216 may use a second frequency slot to broadcast the first audio stream to wireless terminal 230 over second frequency. As noted above, the audio processors 214 and 216 may be integrated and/or may correspond to individual channels and/or circuits of a single component or device. Thus, a single audio processor may perform the functions of depicted audio processors 214 and 216.

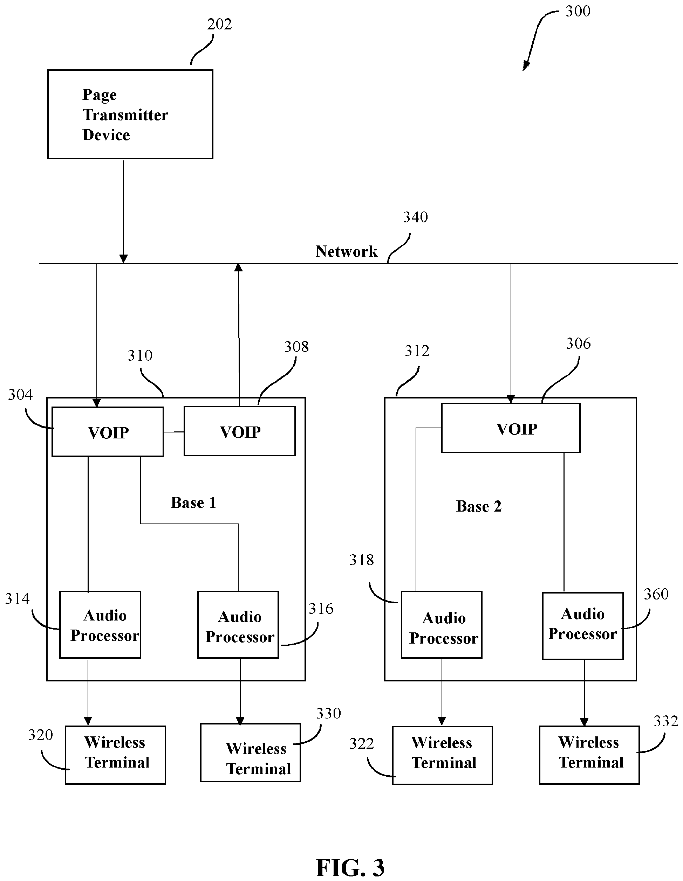

Figure 3 depicts an implementation of a multicell DECT system 300 for performing group paging of wireless terminals in which one or more base stations include a multicast listener. The system 300 includes an IP-based network 340, e.g., a wired LAN, a first base station 310 and a second base station 312. In embodiments, only one base station, e.g., the first base station 310, may be configured to receive multicast packets (e.g., only the first base station may be configured as a multicast listener). As in the embodiment of Figure 2, the IP multicast packets may be transmitted via the network 340 from the page transmitter device 202 or from another base station. The first base station 310 receives the IP multicast packets from the network 340 via a first VoIP processor 304. After the first base station 310 determines that one or more of the wireless terminals are localized to the first base station 310 based on the multicast address, the first processor VoIP 304 may convert the IP multicast data packets into an audio stream and output the audio stream to the localized wireless terminals (320 and 330) via respective audio processors (314 and 316). Although audio processors 314 and 316 are depicted in the figure as separate blocks, they may be integrated and/or may correspond to individual channels and/or circuits of a single component or device. Thus, a single audio processor may perform the functions of depicted audio processors 314 and 316. The audio processors and VoIP processor may be implemented integrally in various combinations, such as in a single (or a few) processors and/or integrated circuits.

In some embodiments, the first base station 310 may determine that one or more wireless terminals of the first paging group are localized to the second base station 312 of the system 300. In other embodiments, the first base station 310 may determine that one of the wireless terminals localized to the first base station 310 and part of the first paging group has localized (e.g., roamed) to another base station. In both scenarios, the first base station 310 can establish a proxy call between the first base station 310 and the other base station and transmit the audio stream to the other base station via the proxy call. For example, the first base station 310 may determine that wireless terminal 322 is part of the first paging group and is localized to the second base station 312 after checking the shared database. The proxy call may be established by a second VoIP processor 308 of the first base station with a VoIP processor 306 of the second base station. The second VoIP processor 308 can receive the audio stream from the first VoIP processor 304 and then transmit the audio stream to the VoIP processor 306 via the proxy call.

After receiving the audio stream, the VoIP processor 306 of the second base station 312 outputs the audio stream to the wireless terminals of the first paging group that are localized to the second base station. For example, if both wireless terminals 322 and 332 were determined to be part of the first paging group, VoIP processor 306 would output the audio stream to audio processors 318 and 360 which would broadcast the audio stream to wireless terminals 322 and 332 respectively. In another example, VoIP processor 306 may only output the audio stream to wireless terminal 322 if it is determined that wireless terminal 332 is not part of the first paging group.

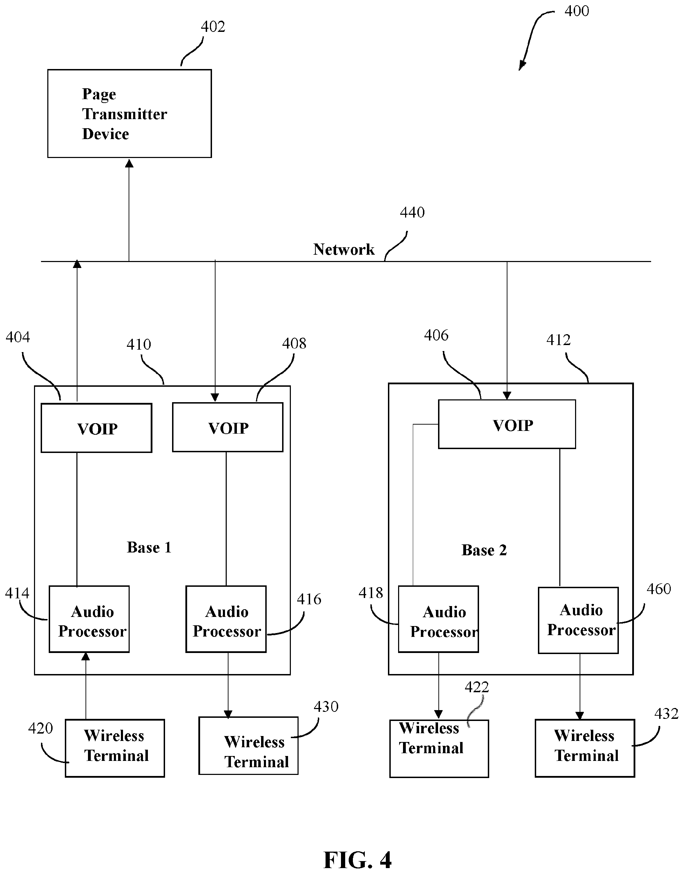

Figure 4 depicts an implementation of a multicell DECT system 400 for performing group paging of wireless terminals in which one or more base stations include a multicast sender. The system 400 includes an IP-based network 440, e.g., a wired LAN, a first base station 410, and a second base station 412. In embodiments, only one base station may be configured to transmit IP multicast packets (e.g., only the first base station may be configured as a multicast sender).

The first base station 410 may configured to receive a first audio stream from a wireless terminal 420 localized to the first base station 410. Wireless terminal 420 may be associated with a first group paging. The first base station 410 may receive the first audio stream by an audio processor 414. In embodiments, the first audio stream may be received by the audio processor from the wireless terminal 420 via a TDM channel. Further, the audio processor 414 may be associated with a specific frequency slot of the first base station 410. Thus, the wireless terminal 420 may use the specific frequency slot when transmitting the first audio stream to the audio processor 414. After receiving the first audio stream, the audio processor 414 may output the first audio stream to the first VoIP processor 404. This may be controlled by a call controller.

As in Figure 2, the first base station 410 is configured to control a processor e.g., first VoIP processor 404 to process the first audio stream to convert the first audio stream into IP multicast packets. The first base station 410 is further configured to convert the first audio stream into IP multicast packets, which may be in the form of an RTP stream.

The first base station 410 is further configured to transmit the IP multicast packets to the network 440 via the first VoIP processor 404. The transmitted IP multicast packets are directed to a first multicast address (e.g., of a defined set of multicast addresses). Each multicast address in the defined set of multicast addresses corresponds to a paging group. In one example, the multicast address corresponds to a paging group based on an IP address and a port address of the multicast address. In embodiments, as noted above, the set of multicast addresses may contain only one multicast address corresponding to a single paging group.

The transmitted IP multicast packets may be transmitted to the network 440. The system 400 may be a multicell system comprising a plurality of base stations. In embodiments, at least one of the plurality of base stations receives the IP multicast packets transmitted by the first VoIP processor 404.

In embodiments, the first base station 410 may receive the transmitted packets via another processor. For example, the first base station 410 can receive the IP multicast packets via a second VoIP processor 408. The second VoIP processor 408 can cover the IP multicast packets to an audio stream and output the first audio stream to the wireless terminal 430 via audio processor 416 after it is determined that wireless terminal 430 is part of the first paging group and localized to the first base station 410.

In embodiments, the second base station 412 may receive the IP multicast packets transmitted by the first base station 410. For example, the second base station 412 may receive the IP multicast packets via VoIP processor 406. After determining that both wireless terminals 422 and 432 are part of the first paging group and localized to the second base station 412, the VoIP processor 406 may convert the IP multicast packets to an audio stream and output the audio stream to the wireless terminals 422 and 432 via audio processors 418 and 460.

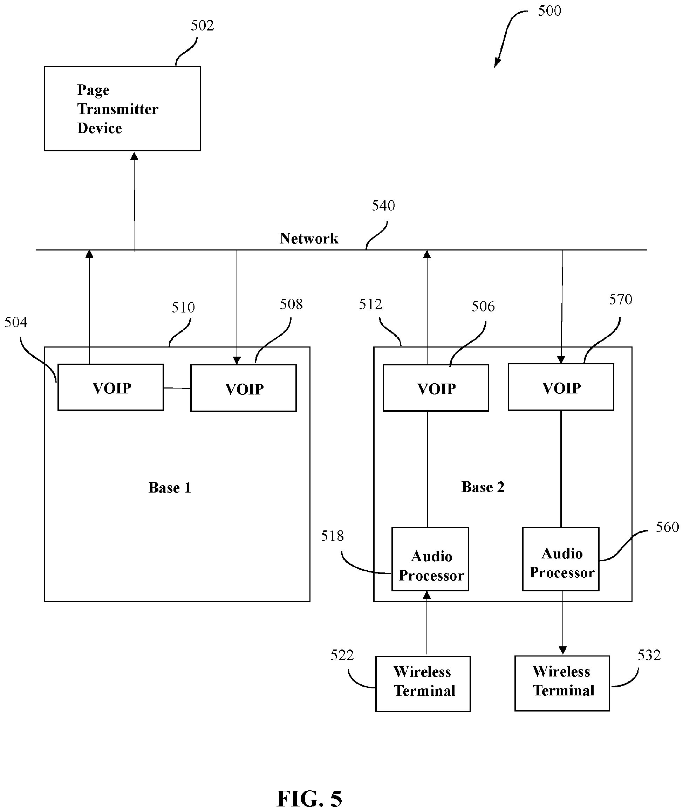

Figure 5 depicts an implementation of a multicell DECT system 500 for performing group paging of wireless terminals in which a wireless terminal localizes (e.g., roams) to a new base station while transmitting a page, i.e., while broadcasting an audio stream that the original base station was transmitting as IP multicast packets to the network 540. The original base station may establish a proxy call with the new base station and receive the audio stream via the proxy call from the new base station. This allows the original base station to continue transmitting the IP multicast packets.

For example, the first base station 510 may be receiving an audio stream from wireless terminal 522 and broadcasting IP multicast packets converted from the audio stream to the network 540 via a first VoIP processor 504. If the first base station 510 detects that the wireless terminal 522 has localized (e.g., roamed) to a second base station 512, then the first base station 510 establishes a proxy call between the first base station 510 and the second base station 512. The proxy call may be established between a second VoIP processor 508 of the first base station 510 and a VoIP processor 506 of the second base station 512.

The VoIP processor 506 receives the audio stream from the wireless terminal 522. In embodiments, the audio stream may first be received by an audio processor 518 of the second base station 512 which then transfers the audio stream to a VoIP processor 506 of the second base station 512. The VoIP processor 506 of the second base station 512 may transfer the audio stream to second VoIP processor 508 of the first base station 510 via the established proxy call. The second VoIP processor 508 may transfer the audio stream to the first VoIP processor 506 which converts the audio stream to IP multicasts packets to continue transmitting the IP multicast packets to the network 540. In embodiments, the second VoIP processor 508 may convert the audio stream into IP multicast packets and transfer the IP multicast packets to the first VoIP processor 504 of the first base station 510 so that the first base station 510 can continue transmitting the IP multicast packets to the network 540. Although audio processors 522 and 532 are depicted in the figure as separate blocks, they may be integrated and/or may correspond to individual channels and/or circuits of a single component or device. Thus, a single audio processor may perform the functions of depicted audio processors 522 and 532. The audio processors and VoIP processor may be implemented integrally in various combinations, such as in a single (or a few) processors and/or integrated circuits.

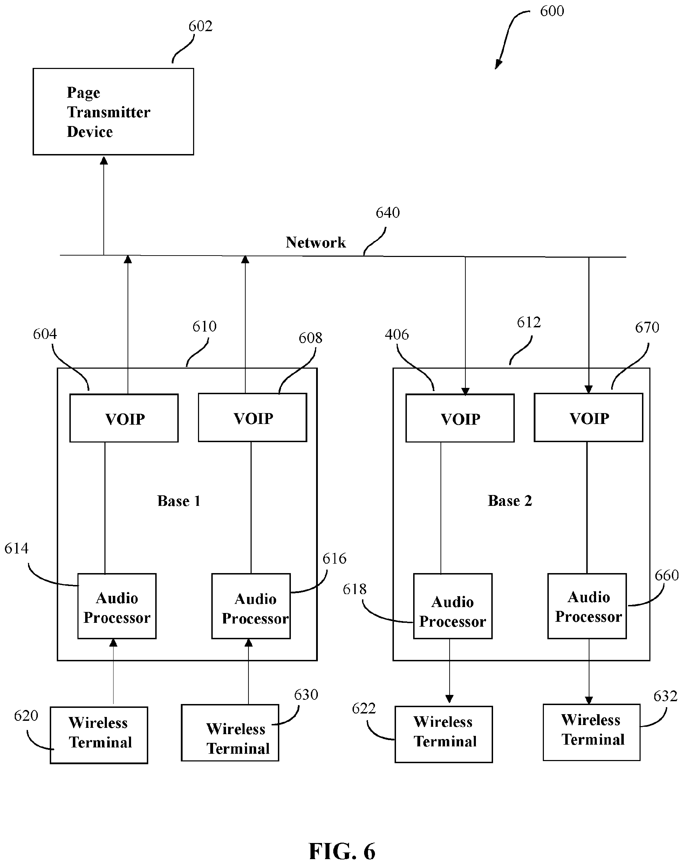

As shown in Figure 6, in embodiments, multiple base stations can be configured to transmit IP multicast packets to a network. Further, one or more base stations can be configured to receive multiple IP multicast packets belonging to different paging groups simultaneously.

Figure 6 depicts an implementation of a multicell DECT system 600 for performing group paging of wireless terminals in which a first base station 610 transmits separate IP multicast streams and a second base station 612 receives separate multiple IP streams. The first base station 610, as in Figure 4, receives a first audio stream from wireless terminal 620. The first audio stream is received at a first VoIP processor 604 for the first base station 610 which converts the first audio stream into a first IP multicast packets. The first IP multicast packets are then transmitted to the network 640. Further, the first audio stream may initially be received by a first audio processor 614 which transfer the audio stream to the first VoIP processor 604.

The first base station 610 receives a second audio stream from wireless terminal 630. The second audio stream is received by a second VoIP processor 608 for the first base station 610 which converts the second audio stream into second IP multicast packets. The second IP multicast packets are then transmitted to the network 640. Further, the first audio stream may initially received by a second audio processor 616 which transfers the audio stream to the first VoIP processor 608.

In embodiments, the first IP multicast packet is received by the second base station 612. The second base station 612 may receive the first IP multicast packets via a first VoIP processor 606 for the second base station 612. The first VoIP processor 606 for the second base station 613 converts the first IP multicast packets into the first audio stream and outputs the first audio stream to the wireless terminal 622. In outputting the first IP multicast stream, the first VoIP processor 606 for the second base station 612 may transfer the first audio stream to a first audio processor 622. The first audio processor 622 may broadcast the first audio stream to the wireless terminal 622.

Similarly, the second IP multicast packet is received by the second base station 612. The second base station may receive the second IP multicast packets via a second VoIP processor 670 for the second base station 612. The second VoIP processor 670 for the second base station 612 converts the second IP multicast packets into the second audio stream and outputs the second audio stream to the wireless terminal 632. In outputting the second IP multicast stream, the second VoIP processor 670 for the second base station 612 may transfer the second audio stream to a second audio processor 660. The second audio processor 660 may broadcast the second audio stream to the wireless terminal 632.

Although audio processors 620 and 630 are depicted in the figure as separate blocks, they may be integrated and/or may correspond to individual channels and/or circuits of a single component or device. Thus, a single audio processor may perform the functions of depicted audio processors 620 and 630. The same is true for audio processors 622 and 632. The audio processors and VoIP processor may be implemented integrally in various combinations, such as in a single (or a few) processors and/or integrated circuits.

In embodiments, the first audio stream corresponds to a first paging group and the second audio stream corresponds to a second paging group. The first base station 610 determines that the first audio stream corresponds to a first paging group and the second audio stream corresponds to a second paging group after receiving both streams and can determine where to transmit the audio streams based on the determination. For example, the first base station 610 can determine to transmit the first IP multicast packets to the second base station 612 after determining that the wireless terminal 622 is part of the first paging group and localized to the second base station 612. Similarly, the first base station 610 can determine to transmit the second IP multicast packets to the second base station 612 after determining that the wireless terminal 632 is part of second paging group and localize to the second base station 612.

In embodiments, a wireless terminal can be part of multiple paging groups. Further, each paging group may have a different priority level. Thus, when IP multicast packets belonging to two separate paging groups are received at the same time at a base station in which a localized wireless terminal belongs to both paging groups, the higher priority paging group can be played by the wireless terminal.

For example, first base station 610 may receive a first audio stream from wireless terminal 622 and a second audio stream from wireless terminal 632. The first audio stream can correspond to a first paging group with a first priority and the second audio stream can correspond to a second paging group with a second priority. The first paging group has higher priority than the second paging group. The first base station 610 can determine that wireless terminal 622 is part of the first paging group and localized to the second base station 612. Similarly, the first base station 610 can also determine that the wireless terminal 622 also belongs to the second paging group. Thus, the first base station 612 can transmit first IP multicast packets converted from the first audio stream and second IP multicast packets converted from the second audio stream concurrently to the second base station 612. Both streams can be received by the first VoIP processor 608 of the second base station 612. The second base station 612 can determine that the first paging group has higher priority than the second paging group and output the first audio stream converted from the first IP multicast packets to the wireless terminal 622 based on the determination.

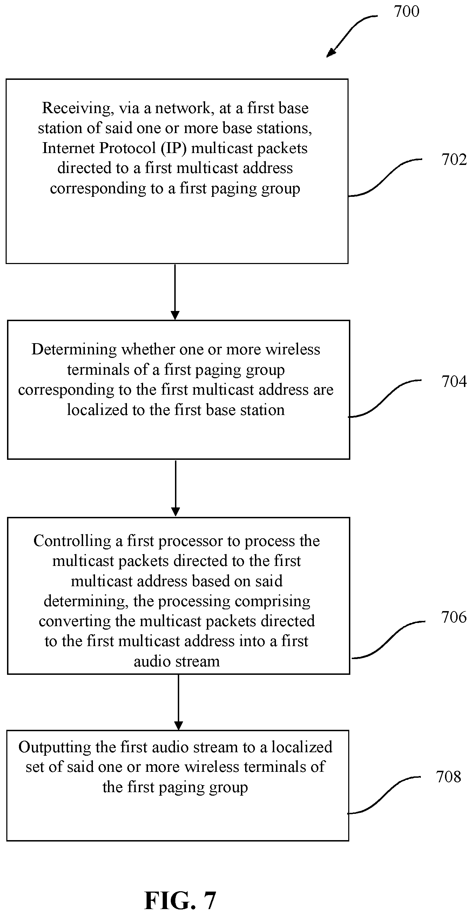

Figure 7 is a flowchart of a method 700 for performing group paging of wireless terminals in communication with one or more base stations of a communication system.

The method 700 includes receiving, via a network, at a first base station of said one or more base stations, Internet Protocol (IP) multicast packets directed to a first multicast address corresponding to a first paging group (702). The method 700 further includes determining whether one or more wireless terminals of a first paging group corresponding to the first multicast address are localized to the first base station (704). The method 700 further includes controlling a first processor to process the multicast packets directed to the first multicast address based on said determining, the processing comprising converting the multicast packets directed to the first multicast address into a first audio stream (706). The method 700 further includes outputting the first audio stream to a localized set of said one or more wireless terminals of the first paging group (708).

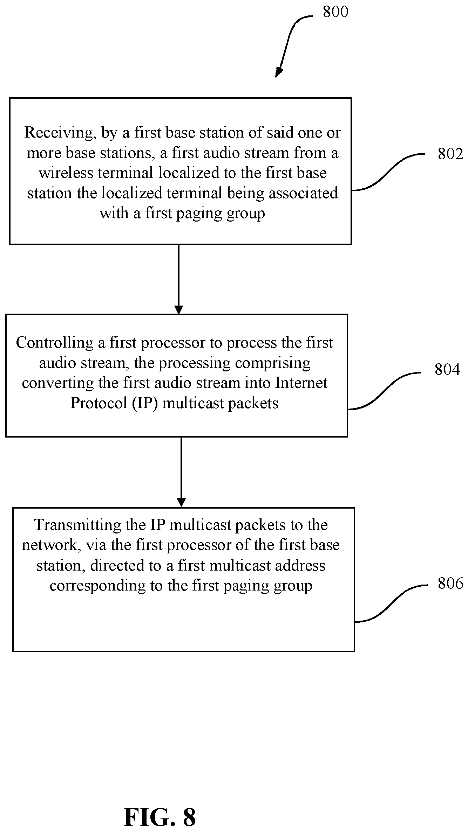

Figure 8 is a flowchart of a method 800 for performing group paging of wireless terminals in communication with one or more base stations of a communication system.

The method 800 includes receiving, by a first base station of said one or more base stations, a first audio stream from a wireless terminal localized to the first base station the localized terminal being associated with a first paging group (802). The method 800 includes controlling a first processor to process the first audio stream, the processing comprising converting the first audio stream into Internet Protocol (IP) multicast packets (804). The method 800 includes transmitting the IP multicast packets to a network, via the first processor of the first base station, directed to a first multicast address corresponding to a first paging group (806).

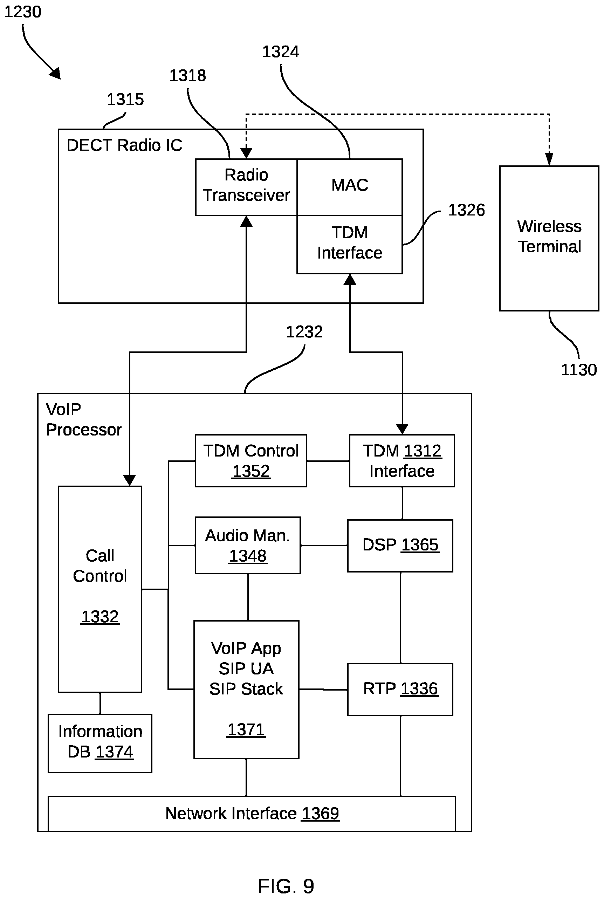

Figure 9 depicts a base station 1230 of a multicell DECT system in which a call is established between a wireless terminal 1130 localized to the base station 1230. The base station 1230 includes a radio integrated circuit (IC) 1315 which handles the wireless radio frequency (RF) communication between the DECT base station and the DECT handsets e.g., wireless terminal 1130. The radio IC 1315 includes a radio transceiver 1318 which handles the physical transmission and reception of RF signals, modulates the digital data to be transmitted wirelessly via RF signals, and demodulates received RF signals to retrieve the received digital data.

The radio IC 1315 includes a medium access control (MAC) module 1324, which is responsible for managing the Time Division Multiple Access (TDMA) time slots and ensuring that each device (e.g., base station or handset) transmits or receives in its allocated time, avoiding collisions. DECT allows for multiple parallel communications, such as voice, data, and control signals, over the same channel. The MAC module 1324 handles the multiplexing of these different types of communication into the TDMA structure.

In the radio IC 1315 the MAC module 1324 is in communication with the radio IC end of a Time Division Multiplexing (TDM) interface 1326 which functionally connects the radio IC to the VoIP processor 1232 of the base station 1230 via the VoIP end of the TDM interface 1312. The data input and output by the VoIP end of the TDM interface 1312 is processed by other components of the VoIP processor 1232, as discussed in further detail below.

The VoIP processor 1232 includes a network interface 1369 for connecting to IP-based networks, e.g., local area networks and the Internet. Additionally, as discussed above, the base station 1230 has a Call Control 1332 for controlling the VoIP processor and other functions of the base station.

The Call Control 1332 interacts with an information database 1374 responsible for storing call-related information, such as SIP data. The information database 1374 may also form part of a shared database within the multicell system. For example, the database 1374 may store and share status information with other databases in other base stations within the multicell system in real-time. The status information may include information such as the base station to which a wireless terminal is currently localized.

The Call Control 1332 interacts with a Voice over Internet Protocol application (VoIP APP) 1371, which handles call setup, management, and termination. Specifically, the VoIP application 1371 handles signaling protocols, such as Session Initiation Protocol (SIP), to establish, manage, and terminate calls over the IP network. For example, the VoIP application sends and receives signaling messages, such as INVITE, ACK, BYE, etc. The VoIP application 1371 is also responsible for the Real-time Transport Protocol (RTP) streams, including packetizing the voice data, handling sequence numbering, timestamping, etc.

The base station 1230 further includes one or more processors, including, for example, the call control 1332 (discussed above), the TDM Control 1352 which interacts within the VoIP end of the TDM Interface 1326 (discussed above) to control time division multiplexing and demultiplexing, and the digital signal processor (DSP) 1365 which handles processing digital signals. These processors may be implemented separately, as depicted in Figure 9, or may be integrated in various combinations, such as in a single (or a few) processors and/or integrated circuits. One or more of these processors may be used to execute, at least in part, methods disclosed herein.

The base station 1230 may include an RTP module 1336, which is responsible for handling real time protocol (RTP) packets and real time protocol control (RTCP) packets. The base station 1230 may also include an Audio Manager 1348 for handling audio packets extracted from RTP streams.

At a high level, a telecommunications system or subsystem typically includes, but is not limited to, communication devices, networks, base stations, servers, and a variety of other hardware and software components. Communication devices may include a broad range of devices such as cordless telephones, mobile phones, smartphones, computers, tablets, and other types of devices capable of sending and receiving communication signals. These devices usually include at least one processor, memory, a user interface (such as a display, keyboard, or touch screen), and a network interface for connecting to a network.

The network component of a telecommunications system or subsystem can take various forms, including multicell systems, e.g., Digital Enhanced Cordless Telecommunications (DECT), public switched telephone networks (PSTN), the Internet, mobile networks (e.g., 3G, 4G, 5G), local area networks (LAN), wide area networks (WAN), and others. Base stations (see, e.g., Fig. 9) and/or servers are also commonly part of telecommunications systems, facilitating the storage, processing, and exchange of data. Like the aforementioned communication devices, these elements generally include a processor and memory for executing software applications, as well as network interfaces for communicating with the network and other devices.

The claimed software elements can be realized on a variety of telecommunications systems or subsystems. The following description, in conjunction with the disclosed embodiments described in the foregoing, provides representative, non-limiting examples of potential telecommunications systems or subsystems that could be used to execute the claimed software elements.

Software elements in the telecommunications system may include operating systems, device drivers, networking software, applications, and other types of software. These software elements can be executed on communication devices, base stations, servers, or other hardware components of the telecommunications systems or subsystems. The claimed software elements may be embodied as computer program code (sometimes referred to as instructions) that is executed on one or more of the hardware components of the telecommunications system or subsystem. This code can be provided by way of a computer-readable medium. A computer readable medium may be provided by way of a computer-readable storage medium and/or a computer-readable transmission medium. A computer-readable storage medium, which may be described as being non-transitory, can store the code. A computer-readable storage medium may be part of the communication device, base station, server, or other component, or may be an external storage device, network storage, or cloud storage. A computer-readable transmission medium may include carrier waves, transmission signals or the like. A computer-readable transmission medium may convey instructions between components of a single computer system and/or between plural separate computer systems.

It should be noted that the described telecommunications systems and subsystems are illustrative and that the claimed software elements can be executed on any suitable telecommunications system or subsystem. The specific configuration of the telecommunications system or subsystem may vary depending on the requirements of the application, performance characteristics of the system, cost considerations, and other factors. The scope of protection is not limited to the specific telecommunications systems and subsystems described herein but includes any and all systems or subsystems suitable for implementing the presently described techniques.

Therefore, from one perspective, there have been described approaches performing group paging of wireless terminals, in which a network receives at a first base station of one or more base stations, Internet Protocol multicast packets directed to a first multicast address corresponding to a first paging group. The first base station determines whether wireless terminals of a first paging group corresponding to the first multicast address are localized to the first base station. The first base station controls a first processor to process the multicast packets directed to the first multicast address based on determining whether one or more wireless terminals are localized to the first base station. The processing comprises converting the multicast packets directed to the first multicast address into a first audio stream. The first base station outputs the first audio stream to a localized set of said one or more wireless terminals of the first paging group.

Further examples of feature combinations taught by the present disclosure are set out in the following numbered clauses.

Clause 1. A method for performing group paging of wireless terminals in communication with one or more base stations of a communication system, the method comprising: receiving, via a network, at a first base station of said one or more base stations, Internet Protocol (IP) multicast packets directed to a first multicast address corresponding to a first paging group; determining whether one or more wireless terminals of a first paging group corresponding to the first multicast address are localized to the first base station; controlling a first processor to process the multicast packets directed to the first multicast address based on said determining, the processing comprising converting the multicast packets directed to the first multicast address into a first audio stream; and outputting the first audio stream to a localized set of said one or more wireless terminals of the first paging group.

Clause 2. The method of clause 1, wherein, in said outputting, the first audio stream is output to a first set of one or more audio processors which broadcasts the first audio stream to be played by the localized set of said one or more wireless terminals of the first paging group.

Clause 3. The method according clause 1 or 2, wherein, in said determining whether said one or more wireless terminals of the first paging group are localized to the first base station, the first base station accesses a shared database comprising terminal localization information.

Clause 4. The method according to clause 1, 2 or 3, the method further comprising: determining whether one or more wireless terminals of the first paging group are localized to a second base station of the communication system; establishing a proxy call between the first base station and the second base station; and transmitting the first audio stream to the second base station via the proxy call.

Clause 5. The method of clause 4, wherein the second base station outputs the audio stream to said one or more wireless terminals of the first paging group that are localized to the second base station.

Clause 6. The method of clause 4 or 5, wherein, in said determining whether said one or more wireless terminals of the first paging group are localized to a second base station, the first base station accesses a shared database comprising terminal localization information.

Clause 7. The method of any preceding clause, the method further comprising: receiving, at the first base station of said one or more base stations, IP multicast packets directed to a second multicast address corresponding to a second paging group; determining whether one or more wireless terminals of the second paging group corresponding to the second multicast address are localized to the first base station; controlling a second processor to process the multicast packets directed to the second multicast address based on said determining, the processing comprising converting the multicast packets directed to the second multicast address into a second audio stream; and outputting, by the second processor, the second audio stream to a localized set of said one or more wireless terminals of the second paging group localized to the first base station.

Clause 8. A method for performing group paging of wireless terminals in communication with one or more base stations of a communication system, the method comprising: receiving, by a first base station of said one or more base stations, a first audio stream from a wireless terminal localized to the first base station the localized terminal being associated with a first paging group; controlling a first processor to process the first audio stream, the processing comprising converting the first audio stream into Internet Protocol (IP) multicast packets; and transmitting the IP multicast packets to a network, via the first processor of the first base station, directed to a first multicast address corresponding to the first paging group.

Clause 9. The method of clause 8, wherein, in said receiving, the first audio stream is received by an audio processor which outputs the audio stream to the first processor.

Clause 10. The method according to clause 8 or 9, the method further comprising: detecting that the first wireless terminal has localized to a second base station of said one or more base stations; establishing a proxy call between the first base station and the second base station, wherein the proxy call is established by a second processor of the first base station and a processor of the second base station; and transmitting the first audio stream via the proxy call from the second base station to the first base station to continue said transmitting the IP multicast packets to the network via the first processor of the first base station.

Clause 11. The method of clause 10, wherein, in said transmitting the first audio stream via the proxy call, the second processor of the first base station is placed in communication with the first processor of the first base station.

Clause 12. A system multicell for performing group paging of wireless terminals in communication with one or more base stations, the system comprising: a first base station, of said one or more base stations, comprising at least one processor in communication with memory comprising instructions which, when executed by said at least one processor, cause the first base station to perform: receiving, via a network, at a first base station of said one or more base stations, Internet Protocol (IP) multicast packets directed to a first multicast address corresponding to a first paging group; determining whether one or more wireless terminals of the first paging group corresponding to the first multicast address are localized to the first base station; controlling a first processor to process the multicast packets directed to the first multicast address based on said determining, the processing comprising converting the multicast packets directed to the first multicast address into a first audio stream; and outputting, by the first processor, a first audio stream to a localized set of said one or more wireless terminals of the first paging group.

Clause 13. The system of clause 12, wherein, in said outputting, the first audio stream is broadcast to the localized set of said one or more wireless terminals of the first paging group via respective Time Division Multiplexing (TDM) channels.

Clause 14. The system according to clause 12 or 13, wherein said controlling a first processor to process the multicast packets is performed at least in part by a call controller of the first base station.

Clause 15. The system according to clause 12, 13 or 14, wherein, in said outputting, the first audio stream is output to a first set of one or more audio processors which broadcasts the first audio stream to be played by the localized set of said one or more wireless terminals of the first paging group.

Clause 16. The system of clause 15, wherein said audio processors of the first set of one or more audio processors are each associated with a corresponding frequency slot of the first base station.

Clause 17. The system according to any of clauses 12 to 16, wherein the first multicast address corresponds to the paging group based on an IP address and port of the first multicast address.

Clause 18. The system according to any of clauses 12 to 17, wherein the system is a multicell system comprising a plurality of base stations.

Clause 19. The system according to any of clauses 12 to 18, wherein, in said determining whether said one or more wireless terminals of the first paging group are localized to the first base station, the first base station accesses a shared database comprising terminal localization information.

Clause 20. The system according to any of clauses 12 to 19, wherein the memory further comprises instructions executable by said one or more processors to perform: determining whether one or more wireless terminals of the first paging group are localized to a second base station of said one or more base stations; establishing a proxy call between the first base station and the second base station; and transmitting the first audio stream to the second base station via the proxy call.

Clause 21. The system of clause 20, wherein the second base station outputs the audio stream to said one or more wireless terminals of the first paging group that are localized to the second base station.

Clause 22. The system of clause 20 or 21, wherein, in said determining whether said one or more wireless terminals of the first paging group are localized to a second base station, the first base station accesses a shared database comprising terminal localization information.

Clause 23. The system according to any of clauses 12 to 22, wherein the memory further comprises instructions executable by said one or more processors to perform: receiving, at the first base station of said one or more base stations, IP multicast packets directed to a second multicast address corresponding to a second paging group; determining whether one or more wireless terminals of the second paging group corresponding to the second multicast address are localized to the first base station; controlling a second processor to process the multicast packets directed to the second multicast address based on said determining, the processing comprising converting the multicast packets directed to the second multicast address into a second audio stream; and outputting, by the second processor, the second audio stream to a localized set of said one or more wireless terminals of the second paging group localized to the first base station.

Clause 24. A system for performing group paging of wireless terminals in multicell communication with one or more base stations, the system comprising: a first base station, of said one or more base stations, comprising at least one processor in communication with memory comprising instructions which, when executed by said at least one processor, cause the first base station to perform: receiving, by a first base station of said one or more base stations, a first audio stream from a wireless terminal localized to the first base station the localized terminal being associated with a first paging group; controlling a first processor to process the first audio stream, the processing comprising converting the first audio stream into Internet Protocol (IP) multicast packets; and transmitting the IP multicast packets to a network, via the first processor of the first base station, directed to a first multicast address corresponding to the first paging group.

Clause 25. The system of clause 24, wherein, in said receiving, the first audio stream is received by an audio processor which outputs the audio stream to the first processor.

Clause 26. The system according to clauses 24 or 25, wherein the system is a multicell system comprising a plurality of base stations.

Clause 27. The system of clause 26, wherein at least the first base station of said plurality of base stations is configured to output IP multicast packets to the network.

Clause 28. The system according to any of clauses 24 to 27, wherein the memory further comprises instructions executable by said one or more processors to perform: detecting that the first wireless terminal has localized to a second base station of said one or more base stations; establishing a proxy call between the first base station and the second base station, wherein the proxy call is established by a second processor of the first base station and a processor of the second base station; and transmitting the first audio stream via the proxy call from the second base station to the first base station to continue said transmitting the IP multicast packets to the network via the first processor of the first base station.

Clause 29. The system of clause 28, wherein, in said transmitting the first audio stream via the proxy call, the second processor of the first base station is placed in communication with the first processor of the first base station.

Clause 30. One or more computer-readable media comprising instructions which, when executed by at least one processor, cause said at least one processor to carry out a method for performing group paging of wireless terminals in communication with one or more base stations of a communication system, the method comprising: receiving, via a network, at a first base station of said one or more base stations, Internet Protocol (IP) multicast packets directed to a first multicast address corresponding to a first paging group; determining whether one or more wireless terminals of a first paging group corresponding to the first multicast address are localized to the first base station; controlling a Voice over Internet Protocol (VoIP) processor to process the multicast packets directed to the first multicast address based on said determining, the processing comprising converting the multicast packets directed to the first multicast address into a first audio stream; and outputting, by the VoIP processor, the first audio stream to a localized set of said one or more wireless terminals of the first paging group.

The foregoing detailed description has presented various implementations of the devices and/or processes through the use of block diagrams, schematics, and illustrative examples. As such block diagrams, schematics, and examples include one or more functions and/or operations, it should be understood by those skilled in the art that each function and/or operation within these block diagrams, flowcharts, or examples can be implemented individually and/or collectively by employing a wide range of hardware, software, firmware, or any combination thereof. It should also be recognized by those skilled in the art that the methods or algorithms described herein may incorporate additional steps, may exclude some steps, and/or may execute steps in an order different from the one specified. The various implementations described above can be combined to create additional implementations.

These modifications and other changes can be made to the implementations in light of the above-detailed description. Generally, the terms used in the following claims should not be construed to limit the claims to the specific implementations disclosed in the specification and the claims. Instead, they should be interpreted to encompass all possible implementations, along with the full scope of equivalents to which such claims are entitled. Consequently, the claims are not limited by the disclosure but are intended to cover all possible implementations within their scope.

## Claims

1. A method for performing group paging of wireless terminals in communication with one or more base stations of a communication system, the method comprising:
receiving, via a network, at a first base station of said one or more base stations, Internet Protocol (IP) multicast packets directed to a first multicast address corresponding to a first paging group;
determining whether one or more wireless terminals of a first paging group corresponding to the first multicast address are localized to the first base station;
controlling a first processor to process the multicast packets directed to the first multicast address based on said determining, the processing comprising converting the multicast packets directed to the first multicast address into a first audio stream; and
outputting the first audio stream to a localized set of said one or more wireless terminals of the first paging group.

2. The method of claim 1, wherein, in said outputting, the first audio stream is output to a first set of one or more audio processors which broadcasts the first audio stream to be played by the localized set of said one or more wireless terminals of the first paging group.

3. The method of claim 2, wherein said audio processors of the first set of one or more audio processors are each associated with a corresponding frequency slot of the first base station

4. The method according claim 1, 2 or 3, wherein, in said determining whether said one or more wireless terminals of the first paging group are localized to the first base station, the first base station accesses a shared database comprising terminal localization information.

5. The method according to any preceding claim, the method further comprising:
determining whether one or more wireless terminals of the first paging group are localized to a second base station of the communication system;
establishing a proxy call between the first base station and the second base station; and
transmitting the first audio stream to the second base station via the proxy call;
wherein, for example, the second base station outputs the audio stream to said one or more wireless terminals of the first paging group that are localized to the second base station, and/or in said determining whether said one or more wireless terminals of the first paging group are localized to a second base station, the first base station accesses a shared database comprising terminal localization information.

6. The method of any preceding claim, wherein, in said outputting, the first audio stream is broadcast to the localized set of said one or more wireless terminals of the first paging group via respective Time Division Multiplexing (TDM) channels.

7. The method according to any preceding claim, wherein said controlling a first processor to process the multicast packets is performed at least in part by a call controller of the first base station.

8. The method according to any preceding claim, wherein the first multicast address corresponds to the paging group based on an IP address and port of the first multicast address.

9. The method according to any preceding claim, wherein the system is a multicell system comprising a plurality of base stations.

10. The method of any preceding claim, the method further comprising:
receiving, at the first base station of said one or more base stations, IP multicast packets directed to a second multicast address corresponding to a second paging group;
determining whether one or more wireless terminals of the second paging group corresponding to the second multicast address are localized to the first base station;
controlling a second processor to process the multicast packets directed to the second multicast address based on said determining, the processing comprising converting the multicast packets directed to the second multicast address into a second audio stream; and
outputting, by the second processor, the second audio stream to a localized set of said one or more wireless terminals of the second paging group localized to the first base station.

11. A system for performing group paging of wireless terminals in multicell communication with one or more base stations, the system comprising:
a first base station, of said one or more base stations, comprising at least one processor in communication with memory comprising instructions which, when executed by said at least one processor, cause the first base station to perform:
receiving, by a first base station of said one or more base stations, a first audio stream from a wireless terminal localized to the first base station the localized terminal being associated with a first paging group;
controlling a first processor to process the first audio stream, the processing comprising converting the first audio stream into Internet Protocol (IP) multicast packets; and
transmitting the IP multicast packets to a network, via the first processor of the first base station, directed to a first multicast address corresponding to the first paging group.

12. The system of claim 11, wherein, in said receiving, the first audio stream is received by an audio processor which outputs the audio stream to the first processor.

13. The system according to claims 11 or 12, wherein the system is a multicell system comprising a plurality of base stations, wherein, for example, at least the first base station of said plurality of base stations is configured to output IP multicast packets to the network.

14. The system according to any of claims 11 to 13, wherein the memory further comprises instructions executable by said one or more processors to perform:
detecting that the first wireless terminal has localized to a second base station of said one or more base stations;
establishing a proxy call between the first base station and the second base station, wherein the proxy call is established by a second processor of the first base station and a processor of the second base station; and
transmitting the first audio stream via the proxy call from the second base station to the first base station to continue said transmitting the IP multicast packets to the network via the first processor of the first base station;
wherein, for example, in said transmitting the first audio stream via the proxy call, the second processor of the first base station is placed in communication with the first processor of the first base station.

15. One or more computer-readable media comprising instructions which, when executed by at least one processor, cause said at least one processor to carry out the method or any of claims 1 to 10, or to becomes configured as a processor of the system of any of claims 11 to 14.
